# EUROPÄISCHE PATENTSCHRIFT

(11) **EP 1 393 946 B1**
(45) Veröffentlichungstag und Bekanntmachung des Hinweises auf die Patenterteilung: **12.12.2007**
(21) Anmeldenummer: 03019092.0
(22) Anmeldetag: 22.08.2003
(51) Int. Cl.: B60J 7/053, B60J 7/047

(54) **Fahrzeugdach mit zwei Dachöffnungen**
Vehicle roof with two roof openings
Toit de véhicule avec deux ouvertures de toit

(30) Priorität: 30.08.2002 DE 10240773; 20.09.2002 DE 10243689
(43) Veröffentlichungstag der Anmeldung: 03.03.2004
(73) Patentinhaber: Webasto AG, 82131 Stockdorf (DE)
(72) Erfinder: De Gaillard, Francois, 85390 Mouilleron en Pareds (FR); Wingen, Bernhard, 83620 Feldkirchen (DE)

(56) Entgegenhaltungen:
- DE-A- 2 836 221
- DE-A- 10 054 322
- DE-C- 19 701 211
- DE-C- 19 941 984

## Beschreibung

Die Erfindung betrifft ein Fahrzeugdach mit zwei in einer festen Dachhaut angeordneten Dachöffnungen, einem zwischen den Dachöffnungen angeordneten Mittelteil, welches als integraler Bestandteil der festen Dachhaut ausgebildet ist, und jeweils einem verstellbaren Dachdeckel zum Verschließen und zumindest teilweisen Freigeben der Dachöffnung gemäß dem Oberbegriff des Patentanspruches 1.

Fahrzeugdächer mit zwei Dachöffnungen, die mittels zweier unterhalb einer Fahrzeuginnenseite des Mittelteils übereinander anordbarer Dachdeckel freigegeben werden, sind beispielsweise aus der DE 197 01 211 C1 bekannt. Ein derartiges gattungsgemäßes Fahrzeugdach weist zwei in Fahrtrichtung hintereinander angeordnete Dachdeckel auf, die unterhalb der Fahrzeuginnenseite des zwischen den Dachöffnungen angeordneten Mittelteils angeordnet werden können. Hierfür sind seitlich an einem Rahmen befestigte Führungsschienen zum Führen der verschiebbaren Dachdeckel vorgesehen, zu deren Verlauf der DE 197 01 211 C1 keine näheren Angaben zu entnehmen sind.

Aus der DE 28 36 221 A1 ist ein Fahrzeugdach mit zwei Dachdeckeln bekannt, die unterhalb eines sich in Fahrzeuglängsrichtung erstreckenden Mittelteils stapelförmig angeordnet werden können. Die Dachdeckel werden hierfür mittels seitlich angebrachter Führungsbahnen parallel zu den Dachöffnungsebenen und der Ebene des Mittelteils verschoben und senkrecht zu den Dachöffnungsebenen und der Ebene des Mittelteils mittels heb- und senkbarer Tragvorrichtungen bewegt. Derartige Tragvorrichtungen setzen sich u. a. jeweils aus einem drehbaren Gelenk und einer Gleitplatte zusammen, wobei das Gelenk aus einer horizontalen in eine vertikale Lage verschwenkbar ist, um den Übergang von einem horizontal in einen vertikal ausgerichteten Bewegungsablauf der Dachdeckel zu ermöglichen. Derartige Tragevorrichtungen haben einen komplexen Aufbau des Fahrzeugdachs zur Folge, da Gelenke, Gleitplatten und weitere Teile in Abstimmung mit den Führungsbahnen und den restlichen Fahrzeugdachteilen hergestellt und eingebaut werden müssen.

Demzufolge liegt der vorliegenden Erfindung die Aufgabe zugrunde, ein Fahrzeugdach mit zwei Dachöffnungen und zwei Dachdeckeln zum Verschließen und zumindest teilweisen Freigeben der Dachöffnungen zur Verfügung zu stellen, dessen Öffnungs- und Schließmechanismus einfach im Aufbau und kostengünstig herzustellen ist.

Diese Aufgabe wird gemäß den Merkmalen des Patentanspruches 1 gelöst.

Ein wesentlicher Punkt der Erfindung liegt darin, dass bei einem Fahrzeugdach mit zwei in einer festen Dachhaut angeordneten Dachöffnungen, einem zwischen den Dachöffnungen angeordneten Mittelteil, welches als integraler Bestandteil der festen Dachhaut ausgebildet ist, und zwei verstellbare Dachdeckel, die gegeneinander verschoben unterhalb der Fahrzeuginnenseite des Mittelteils stapelähnlich angeordnet werden können, erste untere und obere Kulissenführungsbahnen angeordnet sind, in welchen ein erstes zu dem Mittelteil hingewandtes Dachdeckelende von jedem Dachdeckel derart führbar ist, dass es zum Verschließen und Freigeben der zugeordneten Dachöffnung in senkrechter Richtung zu der Dachöffnungsebene und in paralleler Richtung zu der Dachöffnungsebene und der fahrzeuginnenseitigen Mittelteilebene verschiebbar ist. Zudem sind zweite Kulissenführungsbahnen angeordnet, in welchen ein zweites gegenüber dem Mittelteil abgewandtes Dachdeckelende von jedem Dachdeckel derart führbar ist, dass es zum Verschließen und Freigeben der zugeordneten Dachöffnung in im wesentlichen paralleler Richtung zu der Dachöffnungsebene verschiebbar ist. Durch die Anordnung fortlaufender erster und zweiter Kulissenführungsbahnen, die zur getrennten Führung der ersten und zweiten Dachdeckelenden dienen, ist ein Freigeben der Dachöffnungen und das Übereinander-Anordnen der Dachdeckel unterhalb der Fahrzeuginnenseite des Mittelteils durch einfaches Führen der Dachdeckelenden innerhalb der Kulissenführungsbahnen auf einfache Weise möglich. Da sowohl ein vertikal als auch ein horizontal ausgerichteter Bewegungsablauf durch die Kulissenführungsschienen selbst gesteuert wird, ist die Herstellung derartiger Fahrzeugdächer kostengünstig.

Sofern sich die seitlich zu den Dachdeckelenden erstreckenden ersten Kulissenführungsbahnen an ihren Enden unterhalb der Fahrzeuginnenseite des Mittelteils übereinander angeordnet sind und an ihren weiteren Enden zu den Dachöffnungen hin in vertikaler Richtung hinführen, ist auf einfache Weise eine wunschgemäße Anordnung der Dachdeckel durch Verschieben entlang der Kulissenführungsbahnen möglich. Denn somit erübrigt sich die zusätzliche Anordnung von Tragvorrichtungen zur Bewegung der Dachdeckel insbesondere in senkrechter Richtung zu der Dachöffnungsebene und der Ebene des Mittelteils.

Vorteilhaft ist jede zweite Kulissenführungsbahn mit einer der ersten unteren Kulissenführungsbahnen verbunden, um das zweite Dachdeckelende unterhalb der Fahrzeuginnenseite des Mittelteils verschiebbar anzuordnen. Auf diese Weise kann die erste untere Kulissenführungsbahn sowohl für das erste als auch für das zweite Dachdeckelende als Führung in eine parallel zu der Ebene der Fahrzeuginnenseite des Mittelteils verlaufende Richtung platzsparend verwendet werden.

Die ersten oberen Kulissenführungsbahnen führen hingegen die ersten Dachdeckelenden und mittels einer Hebelmechanik ebenso die zweiten Dachdeckelenden in eine sich senkrecht zu den Dachöffnungsebenen und der Ebene der Fahrzeuginnenseite des Mittelteils erstreckende Richtung.

Um eine Verbindung zwischen den Dachdeckelenden und den Kulissenführungsbahnen zu erhalten, weisen die ersten und zweiten Dachdeckelenden damit verbundene Bolzen auf, die mit der Fahrzeuginnenseite der Dachdeckelenden verbunden sind und sich in eine im wesentlichen horizontal verlaufende Richtung erstrecken. Die Bolzen sind teilweise als Gleitbolzen in den Kulissenführungsbahnen angeordnet und teilweise als schwenkbare Bolzen zur Herstellung einer Hebelmechanik, die zur Koordinierung der Bewegungsabläufe der ersten und zweiten Dachdeckelenden dient, und zu deren Verbindung mit dem Fahrzeugdach vorgesehen.

Die mit einem der ersten Dachdeckelenden und den ersten unteren und oberen Kulissenführungsbahnen verbundenen Bolzen sind mittels erster Hebel der Hebelmechanik derart miteinander verbunden, dass beim Verschieben der in den ersten unteren und oberen Kulissenführungsbahnen gleitenden Bolzen eine präzise Vertikal- und Horizontalbewegung des ersten Dachdeckelendes erreicht wird.

Die ersten Hebel sind mit zweiten Hebeln, die in den zweiten Kulissenführungsbahnen geführte Bolzen jeweils mit einem der an der Fahrzeuginnenseite der zweiten Dachdeckelenden angebrachten Bolzen verbinden, mittels dritten Hebeln verbunden. Auf diese Weise wird durch die Verschiebungsbewegung des ersten Dachdeckelendes, die durch ein Antriebskabel eingeleitet wird, automatisch eine vertikal und auch horizontal ausgerichtete Bewegung des zweiten Dachdeckelendes begonnen. Es ist somit ein gleichzeitiges und präzises Öffnen beider Dachdeckelenden eines Dachdeckels sichergestellt.

Gemäß einer bevorzugten Ausführungsform sind seitlich zu den ersten unteren Kulissenführungsbahnen parallel dazu verlaufende Kabelantriebskanäle angeordnet, in welchen Kabel zum Antrieb der in den ersten unteren Kulissenführungsbahnen gleitend angeordneten Bolzen geführt werden. Alternativ können die Kabel die in den ersten oberen Kulissenführungsbahnen gleitend angeordneten Bolzen antreiben, wobei das zweite Dachdeckelende mit den an seiner Fahrzeuginnenseite angeordneten Bolzen gleitend direkt in den zweiten Kulissenführungsbahnen geführt wird, ohne dass die Anordnung eines zweiten Hebels notwendig ist. Hierbei werden die mit dem ersten Dachdeckelende verbundenen Bolzen ohne die Anwendung der ersten Hebel direkt in den ersten oberen Kulissenführungsbahnen gleitend angeordnet und angetrieben. Auf diese Weise wird eine vereinfachte und platzsparende Konstruktion des erfindungsgemäßen Fahrzeugdaches zur Verfügung gestellt.

Vorteilhaft sind die Kulissenführungsbahnen unterhalb der Fahrzeuginnenseite des Mittelteils derart stapelförmig angeordnet, dass jeweils zwei Kulissenführungsbahnen, aus verschiedenen entgegengesetzten Richtungen kommend, übereinander angeordnet sind, so dass beide Dachdeckel mittels der ihnen jeweils zwei zugeordneten Kulissenführungsbahnen übereinander gestapelt werden. Die fortlaufenden derart angeordneten Kulissenführungsbahnen ermöglichen einen funktionsgerechten, präzisen, störunanfälligen und schnellen Ablauf der Öffnungs- und Verschließungsvorgänge.

Die stapelförmig übereinander angeordneten Dachdeckel unterhalb der Fahrzeuginnenseite des Mittelteils können durch eine Dachverkleidung zum Fahrzeuginnenraum hin abgedeckt werden, um die optische Wirkung zu verbessern und die Unfallgefahr aufgrund vorstehender Teile zu verringern.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: eine schematische Seitenansicht eines Fahrzeugdachs mit geschlossenen Dachöffnungen im Querschnitt gemäß einer Ausführungsform der Erfindung;
- Fig. 2: eine schematische Seitenansicht des Fahrzeugdachs mit freigegebenen Dachöffnungen gemäß der Ausführungsform der Erfindung;
- Fig. 3: eine vergrößerte Ansicht eines Ausschnitts des in Figur 1 dargestellten erfindungsgemäßen Fahrzeugdaches mit geschlossenen Dachöffnungen;
- Fig. 4: eine Ansicht des in Figur 3 wiedergegebenen Ausschnitts des Fahrzeugdachs während des Öffnungsvorganges, und
- Fig. 5: eine Schnittansicht entlang des in Figur 3 gezeigten Schnitts A - - A des erfindungsgemäßen Fahrzeugdachs.

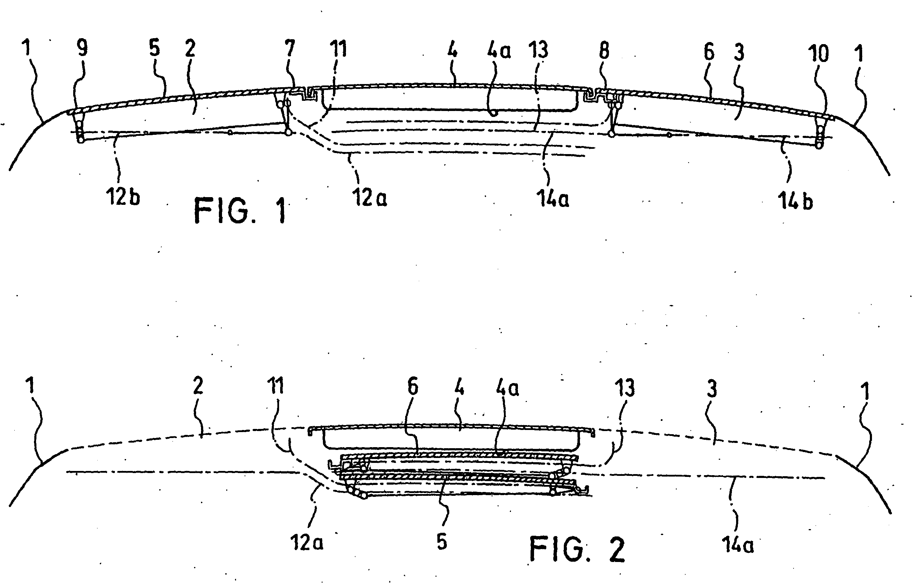

Figur 1 zeigt in einer schematischen Ansicht einen Querschnitt eines Fahrzeugdachs gemäß einer Ausführungsform der Erfindung. Das Fahrzeugdach umfasst eine feste Dachhaut 1, zwei Dachöffnungen 2, 3 und ein Mittelteil 4. Die Dachöffnungen und das Mittelteil 4 können sich entweder in Fahrzeuglängsrichtung oder in Fahrzeugquerrichtung erstrecken.

Die Dachöffnungen 2, 3 sind mit zwei Dachdeckeln 5, 6 verschließbar bzw. zumindest teilweise freigebbar. Zum Freigeben der Dachöffnungen werden die Dachdeckel unterhalb seiner Fahrzeuginnenseite 4a des Mittelteils 4 übereinander in stapelförmiger Weise angeordnet.

Zum Öffnen der Dachöffnungen 2, 3 werden zu dem Mittelteil 4 hingewandte erste Dachdeckelenden 7, 8 mittels in dieser Darstellung angedeuteter erster unterer und oberer Kulissenführungsbahnen 11, 12a und 13, 14a zunächst in eine vorwiegend vertikale Richtung und anschließend in eine kombinierte vertikal-horizontale Richtung oder ausschließlich in horizontaler Richtung unter die Fahrzeuginnenseite 4a des Mittelteils 4 geführt. Zeitgleich werden dem Mittelteil 4 abgewandte zweite Dachdeckelenden 9, 10 mittels zweiter Kulissenführungsbahnen 12b, 14b in im wesentlichen horizontaler Richtung zu dem Mittelteil 4 hin verschoben. Die zweiten Kulissenführungsbahnen 12b und 14b gehen im Bereich eines zu dem Mittelteil 4 hingewandten Öffnungsrandes der Dachöffnungen 2, 3 in die ersten unteren Kulissenführungsbahnen 12a und 14a über, so dass - ebenso wie die ersten dem Mittelteil 4 zugewandten Dachdeckelenden - die zweiten dem Mittelteil 4 abgewandten Dachdeckelenden 9, 10 unterhalb der Fahrzeuginnenseite des Mittelteils 4 angeordnet werden können.

Aufgrund der Übereinander-Anordnung der ersten unteren und oberen Kulissenführungsbahnen 11, 12a, 13 und 14a ist das Stapeln der beiden Dachdeckel 5 und 6 unterhalb des Mittelteils 4 möglich.

Als vorteilhaft hat sich das Öffnen der Dachdeckel 5, 6 mit einer Bewegungsreihenfolge erwiesen, bei dem der erste Dachdeckel 5 zuerst und anschließend der zweite Dachdeckel 6 geöffnet werden. Das Einhalten dieser Bewegungsreihenfolge hat zur Folge, dass die Kulissenführungsbahnen insbesondere im Bereich unterhalb des Mittelteils optimal in Bezug auf die Pakethöhe ausgeformt werden können. Bei derartigen optimal ausgeformten Kulissenführungsbahnen würde, wenn der zweite Dachdeckel 6 zuerst geöffnet werden würde, der erste Dachdeckel 5 während des Öffnungsvorganges an den zweiten Dachdeckel 6 anstoßen.

Figur 2 zeigt in einer schematischen Querschnittsansicht das in Figur 1 dargestellte Fahrzeugdach mit geöffneten Dachöffnungen. Wie der Figur 2 zu entnehmen ist, sind die entlang der Kulissenführungsbahnen gleitend bewegten Dachdeckel aus ihrer Schließstellung, in der sie die Dachöffnung 2, 3 verschließen, zum Freigeben der Dachöffnung 2, 3 unter die Fahrzeuginnenseite 4a des Mittelteils gleitend verschoben worden. Aufgrund eines geringen Abstands zwischen den ersten Kulissenführungsbahnen 11, 12a des Dachdeckels 5 und den ersten Kulissenführungsbahnen 13 und 14a des Dachdeckels 6 ist eine platzsparende Anordnung unter minimaler Einbuße an Fahrzeuginnenraumhöhe möglich.

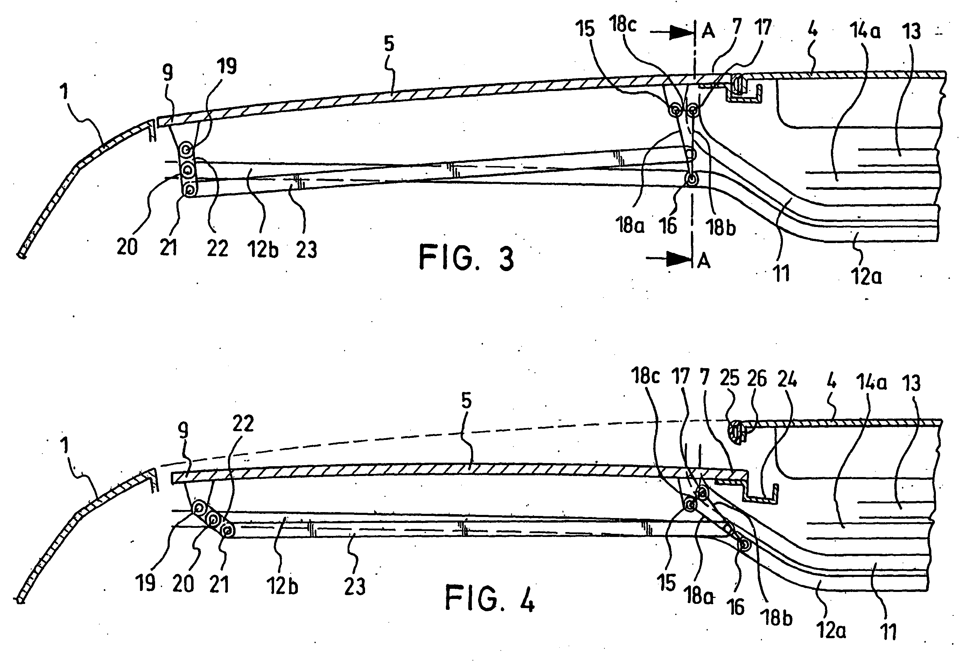

Figur 3 zeigt in einer vergrößerten Ansicht einen längsseitigen Ausschnitt des in Figur 1 dargestellten Fahrzeugdaches mit geschlossenen Dachöffnungen. Der Figur 3 ist zu entnehmen, dass der Dachdeckel 5 an seinen ersten und zweiten Dachdeckelenden 7, 9 fahrzeuginnenseitig Gelenkbolzen 15 und 19 aufweist, die zur Aufnahme einer Hebelmechanik dienen. Die Hebelmechanik umfasst an jeder Dachdeckelseite erste Hebel 18a, 18b und 18c im Bereich des ersten Dachdeckelendes 7, einen zweiten Hebel 22 im Bereich des zweiten Dachdeckelendes 9 und einen dritten Hebel 23, der zum Verbinden der ersten Hebel 18a-c und des zweiten Hebels 22 dient. Die gesamte Hebelmechanik hat die Funktion eines optimierten und präzisen Bewegungablaufs des Dachdeckels 5 während des Öffnungs- und Schließvorganges.

Der Gelenkbolzen 15 ist über den ersten Hebel 18a mit einem in der ersten unteren Kulissenführungsbahn 12a gleitend verschiebbaren Bolzen 16 verbunden. Der Bolzen 16 ist wiederum mittels des ersten Hebels 18b mit einem in der ersten oberen Kulissenführungsbahn 11 gleitend angeordneten Bolzen 17 verbunden. Der erste Hebel 18c verbindet die Bolzen 15 und 17.

Die ersten Hebel 18a - c sind bevorzugt als ein einstückiger Hebel ausgebildet, der die Funktionen der ersten Hebel 18a, 18b und 18c vereint.

An dem zweiten Dachdeckelende 9 ist der Bolzen 19 ebenso wie ein gleitend in der Kulissenführungsbahn 12b verschiebbarer Bolzen 20 und ein Gelenkbolzen 21 an dem zweiten Hebel 22 befestigt. Der Gelenkbolzen 21 verbindet den zweiten Hebel 22 mit dem dritten Verbindungshebel 23, um eine Koordinierung der Bewegungsabläufe und somit ein möglichst zeitgleiches Öffnen und Verschließen des ersten und zweiten Dachdeckelendes 7, 9 sicherzustellen.

In Figur 4 wird das in Figur 3 ausschnittsweise dargestellte Fahrzeugdach gemäß der Ausführungsform der Erfindung während des Öffnungsvorganges gezeigt. Der Figur 4 ist zu entnehmen, dass sich das erste Dachdeckelende 7 bereits in vertikaler Richtung abgesenkt hat und gleichzeitig eine Horizontalbewegung in Richtung des Mittelteils 4 eingeleitet worden ist. Während dieser Öffnungsbewegung passen sich die ersten Hebel 18a, 18b und 18c im Zusammenspiel mit den Bolzen 15, 16 und 17 entsprechend den Verlaufsrichtungen der ersten Kulissenführungsbahnen 11 und 12a an. Die erste obere Kulissenführungsbahn 11, die ebenso wie die restlichen Kulissenführungsbahnen rahmenfest mit einem hier nicht dargestellten Rahmen des Fahrzeugdaches verbunden ist, führt den Bolzen 17 derart, dass zunächst eine vertikale Bewegung und anschließend eine vertikal-horizontale Bewegung, die dann in eine Bewegung in horizontaler Richtung übergeht, durchgeführt wird.

Die erste untere Kulissenführungsbahn 12a ist hingegen für die Bewegung des Bolzens 16 in vorrangig horizontaler oder kombiniert vertikal-horizontaler Richtung zuständig und nimmt die Funktion einer Abstützung des Dachdeckels 5 ein.

Der zweite Hebel 22 verändert auf jeder Seite des Dachdeckels seine Lage während des Öffnungsvorganges ebenso, indem er um die Achse des Bolzens 20, der gleitend in der Kulissenführungsbahn 12b bewegt wird, verschwenkt wird. Damit das zweite Dachdeckelende 9 der Verschiebung des ersten Dachdeckelendes 7 in Richtung des Mittelteils folgt, sind die ersten Hebel 18a - 18c mit dem zweiten Hebel 22 mittels des dritten Verbindungshebels 23 verbunden.

Sobald sich der Bolzen 20 im Bereich des zu dem Mittelteils 4 hingewandten Dachöffnungsrands 26 befindet, wird er in die Führungsbahn der Kulissenführungsbahn 12a übergeleitet, um ihn zusammen mit dem zweiten Dachdeckelende 9 ebenso unterhalb des Mittelteils 4 anzuordnen.

Eine Wasserablaufrinne 24 umgreift einen Dichtungsgummi 25, der an dem Dachöffnungsrand 26 angebracht ist, wenn der Dachdeckel 5 sich im geschlossenen Zustand befindet. Hierfür weist der Dachöffnungsrand 26 einen nach unten weisenden Absatz auf, um das Eindringen von Wasser in den Fahrzeuginnenraum zu vermeiden.

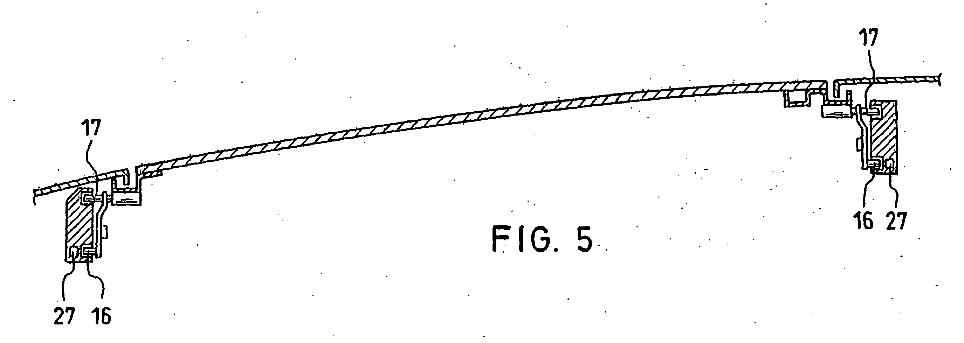

Figur 5 zeigt in einer Querschnittsansicht das Fahrzeugdach entlang des Schnitts A - - A, wie er in Figur 3 gezeigt wird. In Figur 5 wird gezeigt, dass seitlich versetzt zu den Kulissenführungsbahnen 12a Kabelantriebskanäle 27 verlaufen, in welchen Kabel zum Antrieb der Bolzen 16 angeordnet sind. Die Kabel sind mit den Bolzenenden verbunden und führen durch Anwendung einer Zug- oder Druckkraft auf die Bolzen 16 einen Öffnungs- oder Schließvorgang der Dachöffnung mit den Dachdeckel 5 durch.

Alternativ können die Antriebskabel an den Bolzen 17, die in den ersten oberen Kulissenführungsbahnen verlaufen, befestigt sein.

Die Ausführung der Erfindung ist nicht auf die beschriebenen Beispiele und die hervorgehobenen Aspekte beschränkt, sondern ist im Rahmen der Ansprüche ebenso in einer Vielzahl von Abwandlungen möglich, die im Rahmen fachgemäßen Handelns liegen.

**Bezugszeichenliste**
- 1: feste Dachhaut
- 2, 3: Dachöffnungen
- 4: Mittelteil
- 4a: Fahrzeuginnenseite des Mittelteils
- 5, 6: Dachdeckel
- 7, 8: zu dem Mittelteil hingewandte Dachdeckelenden
- 9, 10: von dem Mittelteil abgewandte Dachdeckelenden
- 11, 13: erste obere Kulissenführungsbahnen
- 12a, 14a: erste untere Kulissenführungsbahnen
- 12b, 14b: zweite Kulissenführungsbahnen
- 15, 16, 17, 19, 20, 21: Bolzen
- 18a, 18b, 18c: erste Hebel
- 22: zweiter Hebel
- 23: dritter Hebel
- 24: Wasserablaufrinne
- 25: Dichtungsgummi
- 26: Dachöffnungsrand
- 27: Kabelantriebskanäle

## Patentansprüche

1. Fahrzeugdach mit zwei in einer festen Dachhaut (1) angeordneten Dachöffnungen (2, 3), einem zwischen den Dachöffnungen (2, 3) angeordneten Mittelteil (4), welches als integraler Bestandteil der festen Dachhaut (1) ausgebildet ist, und jeweils einem verstellbaren Dachdeckel (5, 6) zum Verschließen und zumindest teilweisen Freigeben der Dachöffnungen (2, 3), wobei die Dachdeckel (5, 6) zum Freigeben der Dachöffnungen (2, 3) unterhalb, der Fahrzeuginnenseite (4a) des Mittelteils (4) stapelähnlich anordbar sind,
**gekennzeichnet durch**
erste untere und obere Kulissenführungsbahnen (11, 12a; 13, 14a), in welchen ein erstes zu dem Mittelteil (4) hingewandtes Dachdeckelende (7, 8) von jedem Dachdeckel (5, 6) derart führbar ist, dass es zum Verschließen und Freigeben der zugeordneten Dachöffnung (2, 3) in senkrechter Richtung zu der Dachöffnungsebene und in paralleler Richtung zu der Dachöffnungsebene und einer fahrzeuginnenseitigen Mittelteilebene verschiebbar ist, und zweite Kulissenführungsbahnen (12b; 14b), in welchen ein zweites gegenüber dem Mittelteil (4) abgewandtes Dachdeckelende (9, 10) von jedem Dachdeckel (5, 6) derart führbar ist, dass es zum Verschließen und Freigeben der zugeordneten Dachöffnung (2, 3) in im wesentlichen paralleler Richtung zu der Dachöffnungsebene verschiebbar ist.

2. Fahrzeugdach nach Anspruch 1,
**dadurch gekennzeichnet, dass**
jede zweite Kulissenführungsbahn (12b; 14b) mit jeweils einer der ersten unteren Kulissenführungsbahnen (12a; 14a) verbunden ist, um das zweite Dachdeckelende (9, 10) unterhalb der Fahrzeuginnenseite (4a) des Mittelteils (4) verschiebbar anzuordnen.

3. Fahrzeugdach nach Anspruch 1 oder 2,
**dadurch gekennzeichnet, dass**
die ersten und zweiten Dachdeckelenden (7, 8; 9, 10) in den ersten und zweiten Kulissenführungsbahnen (11, 12a, 13, 14a; 12b, 14b) mittels in Fahrzeugquerrichtung verlaufenden Bolzen (15, 16, 17; 19, 20, 21), die mit der Fahrzeuginnenseite der Dachdeckelenden (7, 8; 9, 10) verbunden sind, führbar sind.

4. Fahrzeugdach nach Anspruch 3,
**dadurch gekennzeichnet, dass**
die Bolzen (15, 16, 17; 19, 20, 21) mittels einer Hebelmechanik (18a, 18b, 18c; 22; 23) zur Koordinierung von Bewegungsabläufen der ersten und zweiten Dachdeckelelemente (7, 8; 9, 10) miteinander verbunden sind.

5. Fahrzeugdach nach Anspruch 4,
**dadurch gekennzeichnet, dass**
die in den ersten oberen Kulissenführungsbahnen (11, 13) geführten Bolzen (17) mittels erster Hebel (18a - c) der Hebelmechanik (18a- c; 22; 23) jeweils mit einer der in den ersten unteren Kulissenführungsbahnen (12a-14a) angeordneten Bolzen (16) und einem der an den Fahrzeuginnenseiten der ersten Dachdeckelenden (7, 8) angebrachten Bolzen (15) verbunden sind.

6. Fahrzeugdach nach Anspruch 4 oder 5,
**dadurch gekennzeichnet, dass**
die mit den zweiten Kulissenführungsbahnen (12b, 14b) verbundenen Bolzen (20) jeweils mittels eines zweiten Hebels (22) der Hebelmechanik (18a - c; 22; 23) mit einem der an den Fahrzeuginnenseiten der zweiten Dachdeckelenden (9, 10) angebrachten Bolzen (19) und einem die ersten und den zweiten Hebel (18a - c; 22) verbindenden dritten Hebel (23) verbunden sind.

7. Fahrzeugdach nach Anspruch 4 oder 5,
**dadurch gekennzeichnet, dass**
die an den Fahrzeuginnenseiten der zweiten Dachdeckelenden (9, 10) angebrachten Bolzen (19) in den beiden Kulissenführungsbahnen (12b; 14b) geführt werden..

8. Fahrzeugdach nach einem der Ansprüche 4-7,
**gekennzeichnet durch**
seitlich zu den ersten unteren Kulissenführungsbahnen (12a -14a) parallel dazu verlaufenden Kabelantriebskanälen (27).

9. Fahrzeugdach nach Anspruch 8,
**dadurch gekennzeichnet, dass**
in den Kabelantriebskanälen (27) angeordnete Kabel mit den Bolzen (16) verbunden sind, um die Dachdeckel (5, 6) zu verschieben.

10. Fahrzeugdach nach einem der Ansprüche 4-7,
**gekennzeichnet durch**
seitlich zu den ersten oberen Kulissenführungsbahnen (11; 13) parallel dazu verlaufenden Kabelantriebskanälen.

11. Fahrzeugdach nach Anspruch 10,
**dadurch gekennzeichnet, dass**
in den Kabelantriebskanälen angeordnete Kabel mit den Bolzen (15) verbunden sind, um die Dachdeckel (5, 6) zu verschieben, wobei die Bolzen (15) unter Wegfall der ersten Hebel (18a- c) in den ersten oberen Kulissenführungsbahnen gleitend angeordnet sind.

## Claims

1. Vehicle roof having two roof openings (2, 3) arranged in a fixed roof skin (1), a central part (4) which is arranged between the roof openings (2, 3) and which is constructed as an integral constituent part of the fixed roof skin (1), and in each case a displaceable roof panel (5, 6) for closing and at least partly exposing the roof openings (2, 3), it being possible for the roof panels (5, 6) to be arranged in a manner similar to a stack underneath the vehicle inner side (4a) of the central part (4) in order to expose the roof openings (2, 3),
**characterized by**
first lower and upper slotted guide tracks (11, 12a; 13, 14a), in which a first roof panel end (7, 8) of each roof panel (5, 6), facing towards the central part (4), can be guided in such a way that, in order to close and expose the associated roof opening (2, 3), it can be displaced in the direction at right angles to the roof opening plane and in a direction parallel to the roof opening plane and a central part plane on the inside of the vehicle, and a second slotted guide track (12b; 14b), in which a second roof panel end (9, 10) of each roof panel (5, 6), facing away from the central part (4), can be guided in such a way that, in order to close and expose the associated roof opening (2, 3), it can be displaced in a direction substantially parallel to the roof opening plane.

2. Vehicle roof according to Claim 1, **characterized in that** each second slotted guide track (12b; 14b) is connected to one of the first lower slotted guide tracks (12a; 14a) in each case, in order to arrange the second roof panel end (9, 10) such that it can be displaced underneath the vehicle inner side (4a) of the central part (4).

3. Vehicle roof according to Claim 1 or 2, **characterized in that** the first and second roof panel ends (7, 8; 9, 10) can be guided in the first and second slotted guide tracks (11, 12a, 13, 14a; 12b, 14b) by means of pins (15, 16, 17; 19, 20, 21) which run in the vehicle transverse direction and are connected to the vehicle inner side of the roof panel ends (7, 8; 9, 10).

4. Vehicle roof according to Claim 3, **characterized in that** the pins (15, 16, 17; 19, 20, 21) are connected to one another by means of a lever mechanism (18a, 18b, 18c; 22; 23) in order to coordinate movement sequences of the first and second roof panel elements (7, 8; 9, 10).

5. Vehicle roof according to Claim 4, **characterized in that** the pins (17) guided in the first upper slotted guide tracks (11, 13) are connected by means of first levers (18a - c) of the lever mechanism (18a - c; 22; 23) in each case to one of the pins (16) arranged in the first lower slotted guide tracks (12a - 14a) and one of the pins (15) fitted to the vehicle inner sides of the first roof panel ends (7, 8).

6. Vehicle roof according to Claim 4 or 5, **characterized in that** the pins (20) connected to the second slotted guide tracks (12b, 14b) are in each case connected by means of a second lever (22) of the lever mechanism (18a - c; 22; 23) to a pin (19) fitted to the vehicle inner sides of the second roof panel ends (9, 10) and to a third lever (23) connecting the first and the second lever (18a - c; 22).

7. Vehicle roof according to Claim 4 or 5, **characterized in that** the pins (19) fitted to the vehicle inner sides of the second roof panel ends (9, 10) are guided in the two slotted guide tracks (12b; 14b).

8. Vehicle roof according to one of Claims 4 - 7, **characterized by** cable drive channels (27) running at the sides of the first lower slotted guide tracks (12a - 14a) and parallel thereto.

9. Vehicle roof according to Claim 8, **characterized in that** cables arranged in the cable drive channels (27) are connected to the pins (16) in order to displace the roof panels (5, 6).

10. Vehicle roof according to one of Claims 4-7, **characterized by** cable drive channels running at the sides of the first upper slotted guide tracks (11; 13) and parallel thereto.

11. Vehicle roof according to Claim 10, **characterized in that** cables arranged in the cable drive channels are connected to the pins (15) in order to displace the roof panels (5, 6), the pins (15) being arranged to slide in the first upper slotted guide tracks, with the first levers (18a - c) being omitted.

## Revendications

1. Toit de véhicule comprenant deux ouvertures (2, 3) pratiquées dans une tôle fixe (1) de pavillon ; une partie centrale (4) interposée entre les ouvertures (2, 3) du toit et réalisée pour faire partie intégrante de la tôle fixe (1) du pavillon ; et un capot mobile respectif (5, 6), pour occulter et dégager au moins partiellement les ouvertures (2, 3) du toit, les capots (5, 6) du toit pouvant être agencés à la manière d'un empilement au-dessous de la face intérieure (4a) de la partie centrale (4) située côté véhicule, en vue de dégager les ouvertes (2, 3) du toit,
**caractérisé par**
des premières pistes inférieures et supérieures de guidage coulissant (11, 12a; 13, 14a) dans lesquelles une première extrémité (7, 8) de chaque capot (5, 6) du toit, tournée vers la partie centrale (4), peut être guidée de façon telle que, en vue de l'occultation et du dégagement de l'ouverture associée (2, 3) du toit, elle puisse coulisser dans une direction perpendiculaire au plan desdites ouvertures et dans une direction parallèle au plan desdites ouvertures, et à un plan de la partie centrale côté intérieur du véhicule ; et par des secondes pistes de guidage coulissant (12b ; 14b) dans lesquelles une seconde extrémité (9, 10) de chaque capot (5, 6) du toit, tournée à l'opposé de la partie centrale (4), peut être guidée de façon telle que, en vue d'occulter et de dégager l'ouverture associée (2, 3) du toit, elle puisse coulisser dans une direction sensiblement parallèle au plan desdites ouvertures.

2. Toit de véhicule, selon la revendication 1,
**caractérisé par le fait que**
chaque seconde piste de guidage coulissant (12b, 14b) est reliée à l'une respective (12a ; 14a) des premières pistes inférieures de guidage coulissant, de telle sorte que la seconde extrémité (9, 10) du capot puisse être agencée avec faculté de coulissement au-dessous de la face intérieure (4a) de la partie centrale (4) située côté véhicule.

3. Toit de véhicule, selon la revendication 1 ou 2,
**caractérisé par le fait que**
les premières et secondes extrémités (7, 8; 9, 10) des capots peuvent être guidées, dans les premières et secondes pistes de guidage coulissant (11, 12a, 13, 14a ; 12b, 14b), au moyen de tenons (15, 16, 17; 19, 20, 21) qui s'étendent dans le sens transversal du véhicule et sont reliés à la face intérieure desdites extrémités (7, 8 ; 9, 10) des capots, située côté véhicule.

4. Toit de véhicule, selon la revendication 3,
**caractérisé par le fait que**
les tenons (15, 16, 17; 19, 20, 21) sont mutuellement solidarisés au moyen d'un mécanisme à leviers (18a, 18b, 18c; 22; 23), en vue de coordonner des processus moteurs des premiers et seconds éléments (7, 8; 9, 10) des capots du toit.

5. Toit de véhicule, selon la revendication 4,
**caractérisé par le fait que**
les tenons (17) guidés dans les premières pistes supérieures de guidage coulissant (11, 13) sont respectivement reliés, au moyen de premiers leviers (18a-c) du mécanisme à leviers (18a-c ; 23 ; 24), à l'un (16) des tenons, se trouvant dans les premières pistes inférieures de guidage coulissant (12a-14a), et à l'un (15) des tenons se trouvant sur les faces intérieures des premières extrémités (7, 8) des capots, situées côté véhicule.

6. Toit de véhicule, selon la revendication 4 ou 5,
**caractérisé par le fait que**
les tenons (20) reliés aux secondes pistes de guidage coulissant (12b, 14b) sont respectivement reliés, au moyen d'un deuxième levier (22) du mécanisme à leviers (18a-c ; 22 ; 23), à l'un (19) des tenons se trouvant sur les faces intérieures des secondes extrémités (9, 10) des capots situées côté véhicule, et à un troisième levier (23) reliant les premiers et deuxième leviers (18a-c ; 22).

7. Toit de véhicule, selon la revendication 4 ou 5,
**caractérisé par le fait que**
les tenons (19), disposés aux faces intérieures des secondes extrémités (9, 10) des capots qui sont situées côté véhicule, sont guidés dans les deux pistes de guidage coulissant (12b; 14b).

8. Toit de véhicule, selon l'une des revendications 4-7,
**caractérisé par**
des canaux (27) d'entraînement par câbles qui s'étendent latéralement vis-à-vis des premières pistes inférieures de guidage coulissant (12a-14a), parallèlement à ces dernières,

9. Toit de véhicule, selon la revendication 8,
**caractérisé par le fait que**
des câbles, logés dans les canaux (27) d'entraînement par câbles, sont reliés aux tenons (16) afin d'imprimer des coulissements aux capots (5, 6) dudit toit.

10. Toit de véhicule, selon l'une des revendications 4-7,
**caractérisé par**
des canaux d'entraînement par câbles s'étendant latéralement vis-à-vis des premières pistes supérieures de guidage coulissant (11 ; 13), parallèlement à ces dernières.

11. Toit de véhicule, selon la revendication 10,
**caractérisé par le fait que**
des câbles, logés dans les canaux d'entraînement par câbles, sont reliés aux tenons (15) afin d'imprimer des coulissements aux capots (5, 6) dudit toit, sachant que lesdits tenons (15) sont intégrés avec faculté de glissement dans les premières pistes supérieures de guidage, moyennant une suppression des premiers leviers (18a-c).
